# EUROPEAN PATENT SPECIFICATION

(11) **EP 3 167 582 B1**
(45) Date of publication and mention of the grant of the patent: **15.09.2021**
(21) Application number: 14750036.7
(22) Date of filing: 09.07.2014
(51) Int. Cl.: H04L 27/156

(54) **METHODS, SYSTEMS, AND COMPUTER READABLE STORAGE DEVICES FOR PERFORMING DIGITAL HART DEMODULATION**
VERFAHREN, SYSTEME UND COMPUTERLESBARE VORRICHTUNGEN ZUR DIGITALEN HARTDEMODULATION
PROCÉDÉS, SYSTÈMES ET DISPOSITIFS DE STOCKAGE LISIBLES PAR ORDINATEUR POUR EFFECTUER UNE DÉMODULATION NUMÉRIQUE HART

(43) Date of publication of application: 17.05.2017
(73) Proprietor: GE Intelligent Platforms, Inc., Charlottesville, VA 22911 (US)
(72) Inventor: LOVELL, Alan Carroll, Salem, VA 24153-6422 (US); HENDERSON, Bruce, Salem, VA 24153-6422 (US)
(74) Representative: BRP Renaud & Partner mbB Rechtsanwälte Patentanwälte Steuerberater
(86) International application number: PCT/US2014/045950
(87) International publication number: WO 2016/007153

(56) References cited:
- US-A1- 2013 051 436
- US-B1- 6 297 691
- "DS8500 HART Modem", , 1 February 2009 (2009-02-01), XP055176988, Retrieved from the Internet: URL:http://datasheets.maximintegrated.com/ en/ds/DS8500.pdf [retrieved on 2015-03-16]
- "A519HRT HART Modem", , 1 August 2013 (2013-08-01), XP055176991, Retrieved from the Internet: URL:http://www.onsemi.com/pub_link/Collate ral/AND8346-D.PDF [retrieved on 2015-03-16]

## Description

### TECHNICAL FIELD

The present disclosure relates generally to demodulation. More particularly, the present disclosure relates to digital demodulation of a communication signal.

### BACKGROUND

Smart field devices that output 4 to 20 mA current signals often use Highway Addressable Remote Transducer (HART) communication signals (superimposed upon the process signal) to communicate with host equipment. According to the HART standard, process signals are modulated with binary data using frequency shift Keying (FSK) modulation with 1200 Hz and 2200 Hz tones, having a bit period of 1/1200 second.

To extract the modulated binary data, the modulated signal needs to be demodulated and converted into digital form. Conventional hardware for extracting the process signal and the modulated binary data requires dual paths: one path for the process signal and one path for the modulated signal. In the past, each path required its own analog-to-digital converter (ADC) or an ADC for the process signal path plus a modem. Part of the reason for this is that the ADC is typically time multiplexed across several channels of a modulated signal to amortize cost and space. As an ADC is shared across several channels of a modulated signal, a separate ADC is needed for conversion of the process signal. US 6297 691 B1 describes a receiver for demodulating and decoding signals both of HART and HSH standard coding technologies, whereas no process signals are executed. US 2013/051436 A1 describes a method to adjust a waveform transmitted from a field device in a HART network with an analogue-to-digital converter to overcome cable bandwidth limitations by passing data to be transmitted through a channel compensation device which pre-distorts data to be transmitted to compensate for the bandwidth limitations.

### SUMMARY

In at least one embodiment, the present disclosure provides a method for digitally demodulating an input signal including a process signal modulated with a sinusoidal signal. The method includes receiving the input signal, converted from analog form to digital form. The method also includes filtering the converted input signal through a first programmable digital filter to extract the process signal and filtering the converted input signal through a second programmable digital filter to extract the sinusoidal signal. The method further includes creating a binary data signal based on the extracted sinusoidal signal.

In at least another embodiment, the present disclosure provides a system for Digitally demodulating an input signal including a process signal modulated with a sinusoidal signal. The system includes a first programmable digital filter configured to filter the input signal, converted from analog form to digital form, to extract the process signal. The system also includes a second programmable digital filter configured to filter the input signal, converted from analog form to digital form, to extract the sinusoidal signal, and a programmable detector configured to create a binary data signal based on the extracted sinusoidal signal.

In at least another embodiment, the present disclosure describes a computer readable storage device having stored thereon instructions which, when executed by a processor, cause the processor to perform operations for demodulating an input signal including a process signal modulated with a sinusoidal signal. The operations include receiving the input signal, converted from analog form to digital form, digitally filtering the converted input signal to extract the process signal, and digitally filtering the converted input signal to extract the sinusoidal signal. The operations further include creating a binary data signal based on the extracted sinusoidal signal.

Further features and advantages, as well as the structure and operation of various embodiments, are described in detail below with reference to the accompanying drawings.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various figures. Given the following enabling description of the drawings, the novel aspects of the present disclosure should become evident to a person of ordinary skill in the art.
FIG. 1 illustrates an environment in which a digital HART demodulator may be implemented according to an illustrative embodiment.
FIG. 2 illustrates details of a quadrature receiver which may be used in a digital HART demodulator according to an illustrative embodiment.
FIG. 3 illustrates an arrangement of quadrature receivers which may be used in a digital HART demodulator according to an illustrative embodiment;
FIG. 4 illustrates, in detail, an implementation of a digital HART demodulator, in conjunction with an ADC, according to an illustrative embodiment.
FIG. 5 illustrates a computing device with which a digital HART demodulator may be implemented according to an illustrative embodiment.
FIG. 6 illustrates a method for performing digital HART demodulation according to an illustrative embodiment.

### DETAILED DESCRIPTION

The invention is defined in the appended claims. Those skilled in the art with access to the teachings provided herein will recognize additional modifications, applications, and embodiments within the scope thereof and additional fields in which the multi-reflector design described herein would be of significant utility.

Alternative embodiments, examples, and modifications which would still be encompassed by the disclosure may be made by those skilled in the art, particularly in light of the foregoing teachings. Further, it should be understood that the terminology used to describe the disclosure is intended to be in the nature of words of description rather than of limitation.

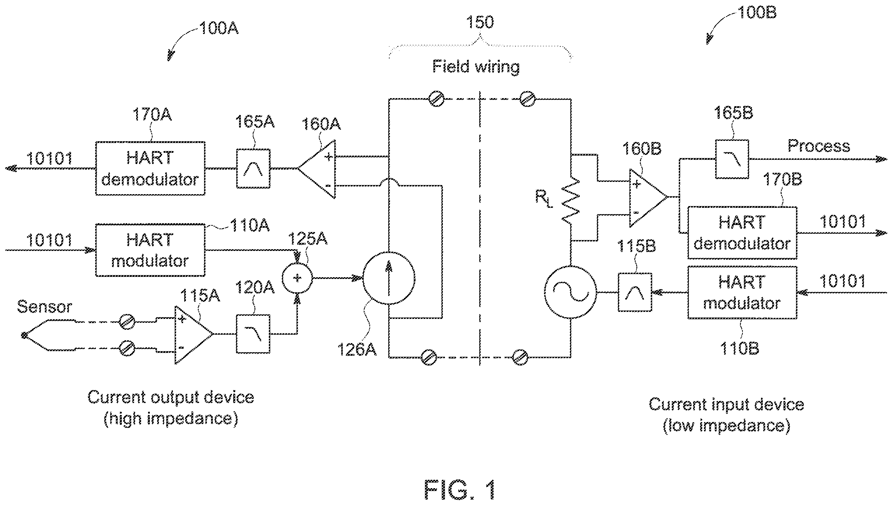

FIG. 1 illustrates an environment in which a digital HART demodulator may be implemented, according to an illustrative embodiment. Referring to FIG. 1, a field device 100A, also referred to herein as a current output device, communicates with a host device 100B, also referred to herein as a current input device, via a field wiring 150. The field device 100A converts a signal from, e.g., a sensor, to a 4 to 20 mA process current signal via a voltage to current amplifier 126A, with signal conditioning from differential amplifier 115A and a low pass filter (LPF) 120A. The process current signal is modulated with a sinusoidal signal produced by a HART modulator 110A via a summer 125A.

The modulated current signal is conducted over the field wiring 150 and detected by an operational amplifier 160B in the host device 100B as a voltage across a resistor R₁ included in the host device 100B. The detected voltage signal is converted into a digital signal by an ADC (not shown in this figure for simplicity of illustration). The process signal representing the sensor measurement is then extracted by a digital filter 165B, and the modulated signal is extracted and demodulated by a digital HART demodulator 170B to produce the encoded binary data.

Similarly, binary data on the host side 100B is converted to a sinusoidal signal by a modulator 110B, filtered by a filter 115B and coupled to the field wiring 150 by a voltage modulator (VM). The modulated signal is detected as a voltage signal by the operational amplifier 160A. Although not shown in the interest of simplicity, the detected signal is converted to a digital signal by an ADC. The converted signal is filtered by a filter 165A to attenuate unwanted signals that may interfere with HART demodulation, e.g., signals in the process signal band from DC to 30 Hz, and extract HART frequency signals in the Extended Frequency Band (500 Hz - 10 KHz). The filtered signal is demodulated by a digital HART demodulator 170A to produce the encoded binary data.

The digital HART demodulators 170A and 170B are illustrated in FIG. 1 in the context of 4 to 20 mA input or output hardware (interfaces). The left half of FIG. 1 shows a field device 100A with a 4 to 20 mA current output, and the right half shows a host device 100B with a 4 to 20 mA input. It should be appreciated that this is just one example of application of the digital HART demodulator. Although not shown, there may be multiple instances of the digital HART demodulator, on either or both the field side and the host side (though field devices are more typically singular with only one instance).

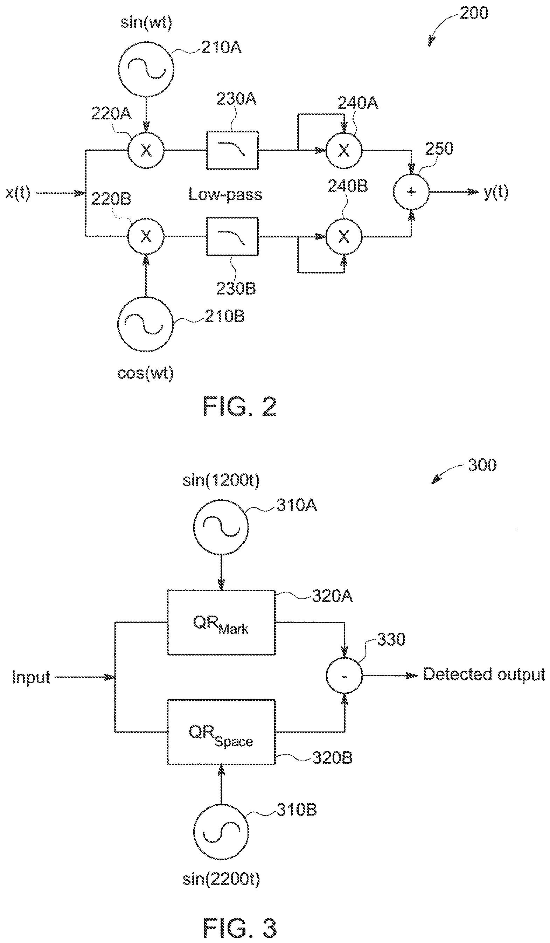

FIG. 2 illustrates a quadrature receiver (QR) 200 which may be used in a digital HART demodulator according to an illustrative embodiment. According to an illustrative embodiment, the QR is an element within the sinusoidal signal filter path of the digital HART demodulator which extracts one of the two frequencies or tones of the FSK modulated signal, 1200 Hz or 2200 Hz. The QR 200 includes oscillators 210A and 210B which generate local oscillator signals, cos(ωt) and sine(ωt), respectively. These signals are mixed with the FSK modulated input signal, represented in FIG. 2 as x(t), by mixers 220A and 220B, respectively. The results are low pass filtered by filters 230A and 230B and squared by multipliers 240A and 240B, respectively. The squared signals are then added by an summer 250 to produce an output represented in FIG. 2 as y(t). The output of the QR 200 may be compared to a threshold, e.g., the output of another QR, to determine the presence or absence of a tone signal, as described in further detail below.

FIG. 3 illustrates an arrangement 300 of quadrature receivers which may be used in a digital HART demodulator according to an illustrative embodiment. The QRs 320A and 320B are fed with local oscillator signals of 1200Hz and 2200Hz, produced by oscillators 310A and 310B, respectively. The QRs 320A and 320B are used to extract an instantaneous estimation of a HART/FSK (1200 Hz or 2200 Hz) signal frequency or tone that is present according to an illustrative embodiment. QR_{Mark} 320A produces a value that represents the energy of the input signal at the local oscillator frequency of 1200Hz. QRspace 320B produces a value that represents the energy of the input signal at 2200 Hz.

The values produced by the QRs 320A and 320B are digital representations of the continuous (analog) value of the energy. Technically, the values are estimates of the energy. At any moment in time, the estimates may be compared, and the larger value indicates the frequency which is most likely present at that moment in time. A digital routine may be used to make this comparison as often as needed, which may be several times per FSK bit period (1/1200, in units of seconds).

According to an illustrative embodiment, this comparison may be made by a difference operator 330. If the resulting value is positive, then the energy estimate at 1200 Hz is larger than the energy estimate of 2200 Hz, thus indicating the likely presence of a tone at 1200 Hz. If the result is negative, then the energy estimate at 1200 Hz is smaller than the energy estimate at 2200 Hz, thus indicating the likely presence of a tone at 2200 Hz. As the digital routine makes successive differences, several times per bit period, the sign of the result will transition a few sample times after the frequency shifts. During the transition, there may be uncertainty in the estimates, and a rapid alternation may result at the output of the difference operator 330. A few sample times after the transition, however, the alternations cease and the output of the difference operator 330 stays solidly in one state or the other.

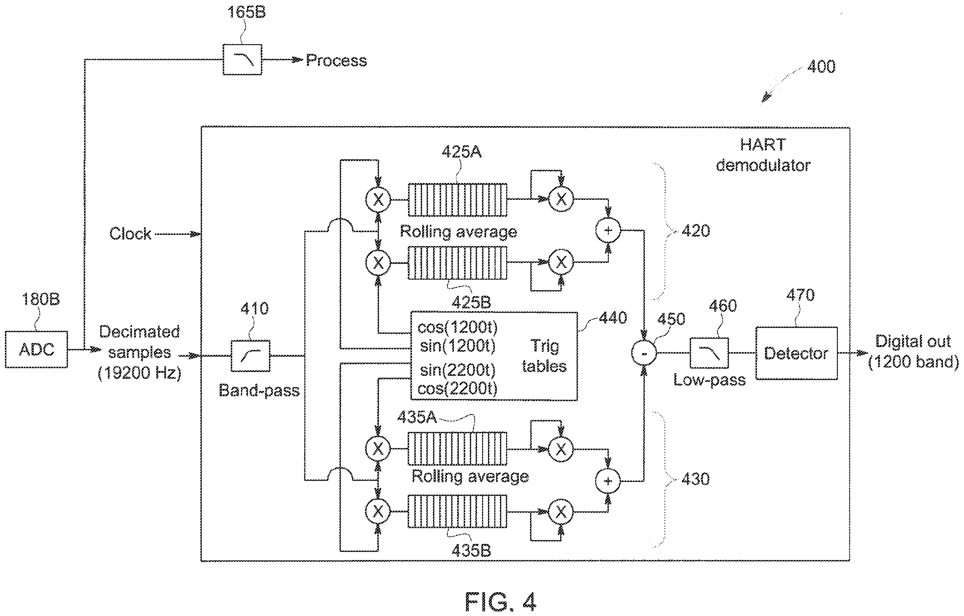

FIG. 4 illustrates a digital demodulator according to illustrative embodiments. The digital HART demodulator 400 may be considered to be the same as the digital demodulator 170A and 170B illustrated in FIG. 1.

Referring to FIG. 4, an analog input signal received the field wiring 150 by the host device 100B is converted to digital form by an ADC 180B. The analog signal includes the process signal modulated with a sinusoidal signal, e.g., an FSK modulated signal.

In the arrangement shown in FIG. 4, the process signal is extracted by a low pass filter 165B. Although not shown, it should be appreciated that an ADC may be similarly used to convert an analog input signal received by the field device 100A via the field wiring 150, and that the converted signal may be filtered by a filter 165A and digitally demodulated in a manner substantially similar to that described below.

Referring again to FIG. 4, the modulated FSK portion of the converted input signal is filtered through a band pass filter 410 to attenuate unwanted signals and extract HART frequency signals. The extracted modulated signal is then processed through two quadrature receivers 420 and 430. Each QR 420 and 430 may include (or share) trigonometric tables 440 for supplying the cosine and sine local oscillator signals at 1200 Hz and 2200 Hz, respectively. Each QR 420 and 430 also employs a low pass filter, such as a windowed filter or a rolling average filter as shown in FIG. 4. These are represented in FIG. 4 as filters 425A, 425B, 435A, and 435B. It should be appreciated that the windowed filter or rolling average filters are examples of how to implement the low pass filters 230A and 230B shown in FIG. 2 and that the disclosure is not limited to these types of low pass filters.

Outputs of the QRs 420 and 430 are compared by a difference operator 450 to produce an output indicating whether a 1200 Hz frequency signal or a 2200 Hz frequency signal is present. The output of the difference operator 450, which is considered "analog" or "continuous" yet represented in the digital domain, is low pass filtered by the low pass filter 460 to remove most of the indecision during the transitions between 1200 Hz and 2200 Hz.

The transitions require some downstream processing logic to produce a glitch-free binary value. For this purpose, a detector 470 may be used.

The detector 470 performs two basic functions. It determines whether the signal is large enough to be considered a tone with a Carrier Detect (CD), and it converts the analog and somewhat noisy value into a binary value using Clock and Data Recovery (CDR).

The CD determines whether the carrier is present with enough signal to noise ratio (SNR) to be reliable. In particular, the FSK modulated signal may cease or disappear in a noisy environment, making reliable communications impossible. In this type of environment, the CD function suppresses the output to prevent noisy binary data.

The CDR determines the ideal sampling time to determine the binary output. The device that transmitted the modulated FSK signal has a different time reference that is asynchronous to the device including the demodulator 400. Additionally, the filtered output of the difference operator 450 has jitter in the edge transitions. The CDR rejects the jitter by locating the edge transitions in the binary stream and then using the "center" or "eye" of the bit period to determine whether there is "1" or "0".

The conversion from the "analog" value from the low pass filter 460 into a binary value is performed by the CDR based on the sign of the analog value. If the sign is positive, the binary value is a '1', and if the sign is negative, the binary value is a '0'.

The bit period is 1/1200 second. However, since the transmitting device is asynchronous, the CDR is used to adjust for the fact that the bit period is not exactly 1/1200.

According to an illustrative embodiment, the digital HART demodulator may be applied per channel, with one ADC dedicated to a particular digital channel. As an alternative, a high sample rate ADC may be used to support multiple demodulators in another implementation. As yet another alternative, there may be one ADC for multiple input analog channels.

According to an illustrative embodiment, the ADC 180 may be implemented with a sigma delta ADC. Sigma deltas ADCs are smaller and cheaper than traditionally used successive approximation (SAR) or Flash based ADCs. Also, a sigma delta ADC may be applied per channel.

According to an illustrative embodiment, the digitization of an input analog signal occurs as close as possible to the signal source, e.g., close to the terminals of the field wiring 150. Processing of the input signal to extract the process signal and the sinusoidal modulated signal and to demodulate the modulated signal then occurs downstream in the digital domain where complexity costs less and requires less board space.

According to illustrative embodiments, a continuous sampling ADC is combined with digital filtering and a digital HART demodulator to demodulate HART signals and acquire the low frequency process signal. Here, the system is not only a HART communications modem, but it also includes the process signal acquisition hardware which is often implemented separately. The HART signal and the process signal are both acquired by the same hardware.

According to illustrative embodiments, use of the digital demodulator, in conjunction with a single ADC for a process signal path and a sinusoidal signal path results in a simpler, cheaper circuit with fewer electronics in the acquisition hardware, minimal analog filters (e.g., for anti-aliasing), and better response times in comparison with traditional HART demodulators.

Traditionally, one HART modem including a HART demodulator was shared by more than one channel for cost, space, and thermal reasons. The digital HART demodulator described herein may easily be implemented for each channel with no multiplexing required. However, it should be appreciated that, although not shown, there may be one instance of the digital HART demodulator for multiple channels using time multiplexing to multiple (N) interfaces.

Further, it should be appreciated that, although not shown, there may be multiple instances of the digital HART demodulators, such that multiple digital HART demodulators may be applied in parallel, one associated with each of N interfaces.

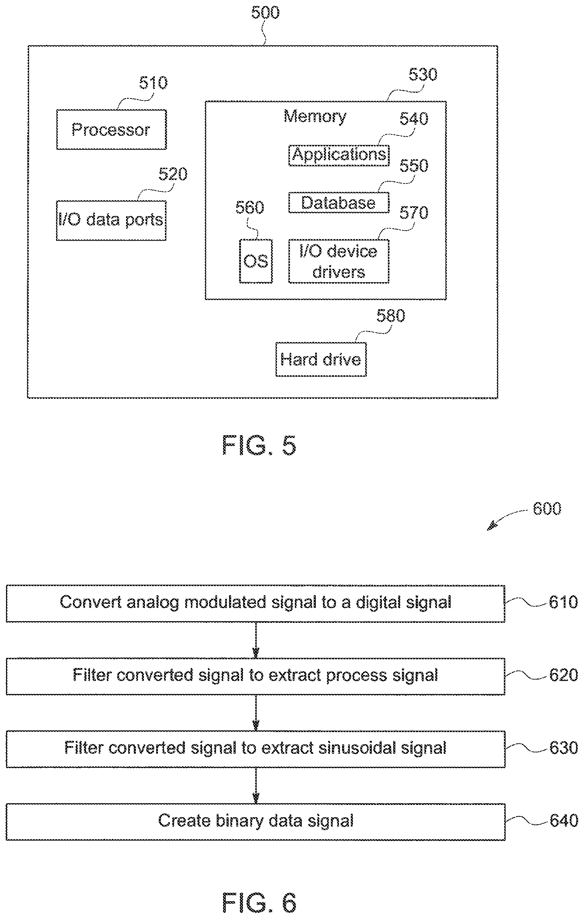

FI5. 5 is a block diagram of a computing device 500 with the digital demodulator described above may be implemented. Although no connections are shown between the components illustrated in FIG. 5, those skilled in the art will appreciate that the components can interact with each other via any suitable connections to carry out device functions.

It should be understood that FIG. 5 and the following description are intended to provide a brief, general description of a suitable environment in which the various aspects of some embodiments of the present disclosure can be implemented. While the description includes a general context of computer-executable instructions, the present disclosure can also be implemented in combination with other program modules and/or as a combination of hardware and software in addition to, or instead of, computer-readable instructions.

The term "application", or variants thereof, is used expansively herein to include routines, program modules, program, components, data structures, algorithms, and the like. Applications can be implemented on various system configurations, including single-processor or multiprocessor systems, minicomputers, mainframe computers, personal computers, handheld-computing devices, microprocessor-based, programmable consumer electronics, combinations thereof, and the like. The terminology "computer-readable media" and variants thereof, as used in the specification and claims can include volatile and/or non-volatile, removable and/or non-removable media, such as, for example, RAM, ROM, EEPROM, flash memory or other memory technology, CDROM, DVD, or other optical disk storage, magnetic tape, magnetic disk storage, or other magnetic storage devices or any other medium that can be used to store information that can be accessed by the components shown in FIG. 5, excluding propagating signals.

According to an illustrative embodiment, the computing device 500 may be implemented in any suitable computing device having a connection to the field wiring 150.

Referring to FIG. 5, the computing device 500 includes a processor 510 that receives an input signal from the field wiring 150, converted to digital form by an ADC, e.g., the ADC 180. The input signal is received via the I/O data ports 520. The input signal is processed by the processor executing applications 540 stored in the memory 530 to create a binary data signal the binary data signal via the I/O data ports 520. The I/O data ports 520 can be implemented with, e.g., an interface including an antenna or other suitable type of transceiver through which data and signals may be transmitted and received wired and/or wirelessly.

The computing device 500 also includes a physical hard drive 580. The processor 510 communicates with the memory 530 and the hard drive 580 via, e.g., an address/data bus (not shown). The processor 510 can be any commercially available or custom microprocessor. The memory 530 is representative of the overall hierarchy of memory devices containing the software and data used to implement the functionality of the device 500. The memory 530 can include, but is not limited to the types of memory devices described above. As shown in FIG. 5, the memory 530 may include several categories of software and data used in the device 500, including applications 540, a database 550, an operating system (OS) 560, and input/output (I/O) device drivers 570.

The I/O device drivers 570 may include various routines accessed through at least one of the OS 560 by the applications 540 to communicate with devices and certain memory components.

The applications 540 can be stored in the memory 530 and/or in a firmware as executable instructions, and can be executed by the processor 510. The applications 540 include various programs that implement the various features of the device 500. The applications 540 include, for example, applications for digitally filtering the input signal to extract the process signal, digitally filtering the input signal to extract the sinusoidal signal, and creating a binary data signal based on the extracted sinusoidal signal. These applications 540 are executed by the processor 510.

The database 550 represents the static and dynamic data used by the applications 540, the OS 560, the I/O device drivers 570 and other software programs that may reside in the memory. The database may 550 may be used to store, e.g., trigonometric tables used in digital filtering, etc.

While the memory 530 is illustrated as residing proximate the processor 510, it should be understood that at least a portion of the memory 530 can be a remotely accessed storage system, for example, a remote hard disk drive, a removable storage medium, combinations thereof, and the like. Thus, any of the data, applications, and/or software described above can be stored within the memory 530 and/or accessed via network connections to other data processing systems (not shown) that may include a local area network (LAN), a metropolitan area network (MAN), or a wide area network (WAN), for example.

The processor 510 can be any commercially available or custom microprocessor. Additionally, although illustrated and described as one processor, the processor 510 could be implemented with multiple processors, which could include distributed processors or parallel processors in a single machine or multiple machines. Further, it should be appreciated that the processor can be used in supporting a virtual processing environment. Also, the processor could include a state machine, an application specific integrated circuit (ASIC), programmable gate array (PGA) including a Field PGA, a programmable logic device (PLD) or a state machine.

FIG. 6 illustrates a method 600 for performing digital HART demodulation according to an illustrative embodiment. It should be understood that the steps or other interactions of the illustrated methods are not necessarily presented in any particular order and that performance of some or all the steps in an alternative order is possible and is contemplated. The steps have been presented in the demonstrated order for ease of description and illustration. Steps can be added, omitted and/or performed simultaneously without departing from the scope of the appended claims. It should also be understood that the method can be ended at any time. In certain embodiments, some or all steps of the method, and/or substantially equivalent steps can be performed by execution of computer-executable instructions stored or included on a computer-readable medium.

The method begins at step 610 at which an analog input signal, e.g., from a current output device 100A, including a process signal modulated with a sinusoidal signal, is converted into digital form by an ADC, such as the ADC 180B. It should be appreciated that this conversion, though shown as part of the demodulation process, may be performed separately from processing by the digital demodulator 400.

At step 620, the converted input signal is digitally faltered, e.g., by the filter 165B, to extract the process signal. This step, like step 610, may be performed separately from processing by the digital demodulator 400.

At step 630, the converted input signal is digitally filtered, e.g., by filters 420A and 430B, to extract the sinusoidal signal. At step 640, a binary signal is created based on the extracted sinusoidal signal, e.g., by the difference operator 450, the low pass filter 460, and the detector 470.

It should be appreciated that, although the method is described in relation to demodulation performed by the host device, similar steps may be performed for demodulation by the field device

## Claims

1. A method (600) for digitally demodulating an input signal including a process signal modulated with a frequency shift key, FSK, sinusoidal signal according to a Highway Addressable Remote Transducer, HART, standard, comprising:
receiving (610) the input signal, converted from analog form to digital form with a single analogue to digital converter, ADC, (180, 180B) for a process signal path;
filtering (620) the converted input signal through a first programmable digital filter (165B) to extract the process signal;
simultaneously filtering (630) the converted input signal through a second programmable digital filter (165A) to extract the sinusoidal signal; and
creating (640) a binary data signal based on the extracted sinusoidal signal.

2. The method (600) of claim 1, wherein the first programmable digital filter
(165B) includes a low pass filter (120A, 460) for removing high frequency components from the converted input signal, and the second programmable digital filter (165A) includes a high pass filter for removing low frequency components from the converted input signal.

3. The method (600) of claim 1, wherein the sinusoidal signal includes a first tone at a first frequency and a second tone at a second frequency, filtering the converted input signal through the second programmable filter includes detecting an occurrence of the first tone and an occurrence of the second tone, and the binary data signal is created based on the detected occurrences of the first tone and the second tone.

4. A system for digitally demodulating an input signal including a process signal modulated with a frequency shift key, FSK, sinusoidal signal according to a Highway Addressable Remote Transducer, HART, standard, comprising:
a first programmable digital filter (165B) configured to filter the input signal, converted from analog form to digital form with a single analogue to digital converter, ADC, (180, 180B) for a process signal path, to extract the process signal;
a second programmable digital filter (165A) configured to simultaneously filter the input signal, converted from analog form to digital form, to extract the sinusoidal signal; and
a programmable detector (470) configured to create a binary data signal based on the extracted sinusoidal signal.

5. The system of claim 4, wherein the first programmable digital filter (165B) includes a low pass filter (120A, 460) for removing high frequency components from the converted input signal, and the second programmable digital (165A) filter includes a high pass filter for removing low frequency components from the converted input signal.

6. The system of claim 5, wherein the low frequency components include the process signal.

7. The system of claim 4, wherein the sinusoidal signal includes a first tone at a first frequency and a second tone at a second frequency, the second programmable digital filter (165A) is configured to detect an occurrence of the first tone and an occurrence of the second tone, and the detector (470) is configured to create the binary data signal based on the detected occurrences of the first tone and the second tone.

8. The system of claim 4, further comprising multiple instances of the first programmable digital filter (165B), the second programmable digital filter (165A), and the programmable detector (470) for digitally demodulating multiple input signals.

9. The system of claim 8, wherein the input signal is converted from analog form to digital form by a programmable analog-to-digital converter (180, 180B), and wherein there is one programmable analog-to-digital converter (180, 180B) associated with each of the multiple instances.

10. The system of claim 8, wherein the input signal is converted from analog form to digital form by a programmable analog-to-digital converter (180, 180B), and wherein there is one programmable analog-to-digital converter (180, 180B) associated with all of the multiple instances.

11. A computer readable storage device (500, 580) having stored thereon instructions which, when executed by a processor (510), perform the method according to claim 1.

## Patentansprüche

1. Verfahren (600) zum digitalen Demodulieren eines Eingangssignals, das ein Prozesssignal einschließt, das mit einem sinusförmigen Signal mit Frequenzumtastung, FSK, gemäß einem Highway-Addressable-Remote-Transducer-Standard, HART-Standard, moduliert ist, umfassend:
Empfangen (610) des Eingangssignals, das mit einem einzelnen Analog-Digital-Wandler, ADC (180, 180 B) für einen Prozesssignalpfad von der analogen Form in die digitale Form umgewandelt wurde;
Filtern (620) des umgewandelten Eingangssignals durch einen ersten programmierbaren digitalen Filter (165B), um das Prozesssignal zu extrahieren;
gleichzeitiges Filtern (630) des umgewandelten Eingangssignals durch einen zweiten programmierbaren digitalen Filter (165A), um das sinusförmige Signal zu extrahieren; und
Erzeugen (640) eines binären Datensignals basierend auf dem extrahierten sinusförmigen Signal.

2. Verfahren (600) nach Anspruch 1, wobei der erste programmierbare digitale Filter (165B) einen Tiefpassfilter (120A, 460) zum Entfernen von Hochfrequenzkomponenten aus dem umgewandelten Eingangssignal einschließt und der zweite programmierbare digitale Filter (165A) einen Hochpassfilter zum Entfernen von Niederfrequenzkomponenten aus dem umgewandelten Eingangssignal einschließt.

3. Verfahren (600) nach Anspruch 1, wobei das sinusförmige Signal einen ersten Ton bei einer ersten Frequenz und einen zweiten Ton bei einer zweiten Frequenz einschließt, das Filtern des umgewandelten Eingangssignals durch den zweiten programmierbaren Filter das Detektieren eines Auftretens des ersten Tons und eines Auftretens des zweiten Tons einschließt und das binäre Datensignal basierend auf dem detektierten Auftreten des ersten Tons und des zweiten Tons erzeugt wird.

4. System zum digitalen Demodulieren eines Eingangssignals, das ein Prozesssignal einschließt, das mit einem sinusförmigen Signal mit Frequenzumtastung, FSK, gemäß einem Highway-Addressable-Remote-Transducer-Standard, HART-Standard, moduliert ist, umfassend:
einen ersten programmierbaren digitalen Filter (165B), der konfiguriert ist, um das Eingangssignal, das mit einem einzelnen Analog-Digital-Wandler, ADC, (180, 180B) für einen Prozesssignalpfad von der analogen Form in die digitale Form umgewandelt wurde, zu filtern, um das Prozesssignal zu extrahieren;
einen zweiten programmierbaren digitalen Filter (165A), der konfiguriert ist, um gleichzeitig das Eingangssignal, das von der analogen Form in die digitale Form umgewandelt wurde, zu filtern, um das sinusförmige Signal zu extrahieren; und
einen programmierbaren Detektor (470), der konfiguriert ist, um ein binäres Datensignal basierend auf dem extrahierten sinusförmigen Signal zu erzeugen.

5. System nach Anspruch 4, wobei der erste programmierbare digitale Filter (165B) einen Tiefpassfilter (120A, 460) zum Entfernen von Hochfrequenzkomponenten aus dem umgewandelten Eingangssignal einschließt und der zweite programmierbare digitale (165A) Filter einen Hochpassfilter zum Entfernen von Niederfrequenzkomponenten aus dem umgewandelten Eingangssignal einschließt.

6. System nach Anspruch 5, wobei die Niederfrequenzkomponenten das Prozesssignal einschließen.

7. System nach Anspruch 4, wobei das sinusförmige Signal einen ersten Ton bei einer ersten Frequenz und einen zweiten Ton bei einer zweiten Frequenz einschließt, wobei der zweite programmierbare digitale Filter (165A) konfiguriert ist, um ein Auftreten des ersten Tons und ein Auftreten des zweiten Tons zu detektieren und der Detektor (470) konfiguriert ist, um das binäre Datensignal basierend auf dem detektierten Auftreten des ersten Tons und des zweiten Tons zu erzeugen.

8. System nach Anspruch 4, ferner umfassend mehrere Instanzen des ersten programmierbaren digitalen Filters (165B), des zweiten programmierbaren digitalen Filters (165A) und des programmierbaren Detektors (470) zum digitalen Demodulieren mehrerer Eingangssignale.

9. System nach Anspruch 8, wobei das Eingangssignal von einem programmierbaren Analog-Digital-Wandler (180, 180B) von der analogen Form in die digitale Form umgewandelt wird und wobei jeder der mehreren Instanzen ein programmierbarer Analog-Digital-Wandler (180, 180B) zugeordnet ist.

10. System nach Anspruch 8, wobei das Eingangssignal von einem programmierbaren Analog-Digital-Wandler (180, 180B) von der analogen Form in die digitale Form umgewandelt wird und wobei allen der mehreren Instanzen ein programmierbarer Analog-Digital-Wandler (180, 180B) zugeordnet ist.

11. Computerlesbare Speichervorrichtung (500, 580), auf der Anweisungen gespeichert sind, die, wenn sie von einem Prozessor (510) ausgeführt werden, das Verfahren nach Anspruch 1 durchführen.

## Revendications

1. Procédé (600) de démodulation numérique d'un signal d'entrée incluant un signal de processus modulé avec un signal sinusoïdal à modulation par déplacement de fréquence, FSK, selon une norme Highway Addressable Remote Transducer, HART, comprenant :
la réception (610) du signal d'entrée, converti d'une forme analogique en forme numérique avec un seul convertisseur analogique-numérique, ADC (180, 180B) pour un chemin de signal de processus ;
le filtrage (620) du signal d'entrée converti à travers un premier filtre numérique programmable (165B) pour extraire le signal de processus ;
le filtrage simultané (630) du signal d'entrée converti à travers un deuxième filtre numérique programmable (165A) pour extraire le signal sinusoïdal ; et
la création (640) d'un signal de données binaire en fonction du signal sinusoïdal extrait.

2. Procédé (600) selon la revendication 1, dans lequel le premier filtre numérique programmable (165B) inclut un filtre passe-bas (120A, 460) pour supprimer des composantes haute fréquence du signal d'entrée converti, et le deuxième filtre numérique programmable (165A) inclut un filtre passe-haut pour supprimer des composantes basse fréquence du signal d'entrée converti.

3. Procédé (600) selon la revendication 1, dans lequel le signal sinusoïdal inclut une première tonalité à une première fréquence et une deuxième tonalité à une deuxième fréquence, le filtrage du signal d'entrée converti à travers le deuxième filtre programmable inclut la détection d'une occurrence de la première tonalité et d'une occurrence de la deuxième tonalité, et le signal de données binaire est créé en fonction des occurrences détectées de la première tonalité et de la deuxième tonalité.

4. Système de démodulation numérique d'un signal d'entrée incluant un signal de processus modulé avec un signal sinusoïdal à modulation par déplacement de fréquence, FSK, selon une norme Highway Addressable Remote Transducer, HART, comprenant :
un premier filtre numérique programmable (165B) configuré pour filtrer le signal d'entrée, converti d'une forme analogique en forme numérique avec un seul convertisseur analogique-numérique, ADC (180, 180B) pour un chemin de signal de processus, pour extraire le signal de processus ;
un deuxième filtre numérique programmable (165A) configuré pour filtrer simultanément le signal d'entrée, converti d'une forme analogique en forme numérique, pour extraire le signal sinusoïdal ; et
un détecteur programmable (470) configuré pour créer un signal de données binaire en fonction du signal sinusoïdal extrait.

5. Système selon la revendication 4, dans lequel le premier filtre numérique programmable (165B) inclut un filtre passe-bas (120A, 460) pour supprimer des composantes haute fréquence du signal d'entrée converti, et le deuxième filtre numérique programmable (165A) inclut un filtre passe-haut pour supprimer des composantes basse fréquence du signal d'entrée converti.

6. Système selon la revendication 5, dans lequel les composantes basse fréquence incluent le signal de processus.

7. Système selon la revendication 4, dans lequel le signal sinusoïdal inclut une première tonalité à une première fréquence et une deuxième tonalité à une deuxième fréquence, le deuxième filtre numérique programmable (165A) est configuré pour détecter une occurrence de la première tonalité et une occurrence de la deuxième tonalité, et le détecteur (470) est configuré pour créer le signal de données binaire en fonction des occurrences détectées de la première tonalité et de la deuxième tonalité.

8. Système selon la revendication 4, comprenant en outre plusieurs exemplaires du premier filtre numérique programmable (165B), du deuxième filtre numérique programmable (165A), et du détecteur programmable (470) pour démoduler numériquement plusieurs signaux d'entrée.

9. Système selon la revendication 8, dans lequel le signal d'entrée est converti d'une forme analogique en forme numérique par un convertisseur analogique-numérique programmable (180, 180B), et dans lequel il y a un convertisseur analogique-numérique programmable (180, 180B) associé à chacun des multiples exemplaires.

10. Système selon la revendication 8, dans lequel le signal d'entrée est converti d'une forme analogique en forme numérique par un convertisseur analogique-numérique programmable (180, 180B), et dans lequel il y a un convertisseur analogique-numérique programmable (180, 180B) associé à l'ensemble des multiples exemplaires.

11. Dispositif de stockage lisible par ordinateur (500, 580) sur lequel sont stockées des instructions qui, lorsqu'elles sont exécutées par un processeur (510), effectuent le procédé selon la revendication 1.
